# FASCICULE DE BREVET EUROPEEN

(11) **EP 0 860 925 B1**
(45) Date de publication et mention de la délivrance du brevet: **17.05.2000**
(21) Numéro de dépôt: 98400383.0
(22) Date de dépôt: 18.02.1998
(51) Int. Cl.: H02G 15/18, H02G 1/14

(54) **Dispositif d'étanchéité et de protection fendu rétractable à froid**
Kaltschrumpfbare geschlitzte Vorrichtung zum Abdichten und Schützen
Cold shrinkable split device for sealing and protection

(30) Priorité: 21.02.1997 FR 9702086
(43) Date de publication de la demande: 26.08.1998
(73) Titulaire: SAGEM SA, 75116 Paris (FR)
(72) Inventeur: Hebert, Emmanuel, 75013 Paris (FR)
(74) Mandataire: Fruchard, Guy

(56) Documents cités:
- EP-A- 0 695 014
- EP-A- 0 750 378
- US-A- 4 282 397
- C BLES PIRELLI: "LABORATOIRES ET INDUSTRIE Inauguration d'une nouvelle ligne de production "Elaspeed" à Marne-la-Vallée" REVUE G N RALE DE L' LECTRICIT , no. 8, septembre 1994, PARIS, pages 62-63, XP000469739

## Description

La présente invention concerne un dispositif d'étanchéité et de protection fendu rétractable à froid pouvant être utilisé en particulier pour recouvrir une dérivation de câbles électriques.

On sait que lors de la réalisation d'une jonction ou d'une dérivation entre des câbles électriques il est nécessaire de réaliser une protection étanche de la jonction ou de la dérivation. Chaque fois que cela est possible compte tenu de l'environnement, un manchon cylindrique dans un état expansé est enfilé sur l'objet à protéger puis est rétracté pour s'appliquer de façon uniforme tout autour de l'objet. Toutefois il arrive fréquemment qu'il ne soit pas possible d'engager un manchon cylindrique sur l'objet à protéger. C'est le cas en particulier des câbles lorsqu'une extrémité du câble n'est pas accessible, ou lorsqu'une dérivation ne justifie pas de sectionner le câble principal pour permettre l'engagement d'un manchon cylindrique sur le câble.

Dans ces cas on utilise un manchon fendu longitudinalement qui peut être engagé latéralement pour venir recouvrir la partie de dérivation à protéger et à étancher. Comme décrit dans les documents EP-A-695 014 et EP-A-750 378, le manchon fendu se présente sous forme d'une nappe en matière thermorétractable ou en matière élastique plus ou moins mise en forme. Après avoir disposé la nappe autour de la dérivation à protéger deux bords opposés de la nappe sont assemblés, généralement au moyen d'organes d'assemblage ou d'une réglette en C engagés sur des profilés d'assemblage fixés sur les bords de la nappe ou réalisés en une seule pièce avec la nappe.

Dans le cas d'une nappe thermorétractable la mise en place est relativement aisée en raison du surdimensionnement de la nappe à l'état expansé par rapport à la jonction à protéger. Toutefois pour assurer une rétraction de la nappe après sa mise en place, il est nécessaire de chauffer celle-ci à une température élevée, généralement au moyen d'un chalumeau. Indépendamment des problèmes que peut poser l'utilisation d'un chalumeau sur un chantier, en particulier le risque de brûlure des opérateurs, les matières thermoplastiques dégagent des vapeurs toxiques incompatibles avec les normes de sécurité qui sont progressivement imposées sur les chantiers.

Dans le cas d'une nappe en matière élastique, celle-ci est plaquée sur la partie de jonction à protéger puis elle est tendue en utilisant des outils permettant de rapprocher les deux bords de la nappe à assembler. La manipulation de ces outils est mal aisée en particulier en raison du fait qu'il est nécessaire d'assurer simultanément le rapprochement des bords de la nappe élastique et l'engagement d'une pièce d'assemblage destinée à maintenir les bords réunis.

Selon l'invention on propose un dispositif d'étanchéité et de protection rétractable à froid comportant une nappe en matière élastique ayant deux bords opposés équipés de moyens d'assemblage et montée de façon amovible dans un état de tension sur un manchon support semi rigide comportant une fente longitudinale ayant des bords en regard, et le dispositif comporte des moyens de retenue pour associer la nappe en matière élastique au manchon support au voisinage des bords de la fente longitudinale du manchon support.

Ainsi, lors de la mise en place du dispositif d'étanchéité et de protection les bords du manchon support sont écartés l'un de l'autre pour engager le dispositif de protection autour de la partie à protéger et étancher, et reviennent automatiquement l'un vers l'autre après la mise en place de sorte qu'il est alors aisé de mettre en place les moyens d'assemblage des bords de la nappe élastique puis de retirer les moyens de retenue et le manchon support pour permettre une rétraction de la nappe élastique sur l'objet à protéger et étancher.

Selon une version avantageuse de l'invention, une matière d'étanchéité pâteuse est disposée sur une face interne de la nappe élastique. Ainsi, lors du retrait du manchon support la matière d'étanchéité est automatiquement appliquée de façon homogène par la rétraction de la nappe élastique.

Selon un aspect avantageux de cette version de l'invention, le dispositif d'étanchéité et de protection comporte un film anti-adhésif disposé entre la matière d'étanchéité et le manchon support. Ainsi, on évite que le retrait du manchon support provoque un raclement de la matière d'étanchéité.

De préférence, le film anti-adhésif est replié et est fixé à une extrémité du manchon support. Ainsi, lors du retrait du manchon support le film anti-adhésif est entraîné par le manchon support en étant replié de façon continue sur lui-même de sorte que l'on évite un glissement du film anti-adhésif sur la matière d'étanchéité et on minimise encore le risque de raclement de la matière d'étanchéité.

Selon un autre aspect avantageux de l'invention le manchon support est conique. On minimise ainsi la rémanence de la nappe élastique lorsque le dispositif d'étanchéité et de protection selon l'invention est stocké pendant une longue période.

D'autres caractéristiques et avantages de l'invention apparaîtront encore à la lecture de la description qui suit de modes de réalisation particuliers non limitatifs du dispositif d'étanchéité et de protection selon l'invention, en référence aux figures ci-jointes parmi lesquelles:
- la figure 1 est une vue en perspective d'une dérivation de câbles illustrant différentes phases de mise en place du dispositif d'étanchéité et de protection selon l'invention,
- la figure 2 est une vue en perspective partielle très agrandie, partiellement en coupe selon la ligne II-II de la figure 1, d'un premier mode de réalisation du dispositif d'étanchéité et de protection selon l'invention,
- la figure 3 est une vue en perspective partielle très agrandie, partiellement écorchée d'un second mode de réalisation du dispositif d'étanchéité et de protection selon l'invention,
- la figure 4 est une vue en perspective partielle illustrant une variante des moyens d'assemblage des bords de la nappe en relation avec un mode de réalisation semblable à celui de la figure 2.

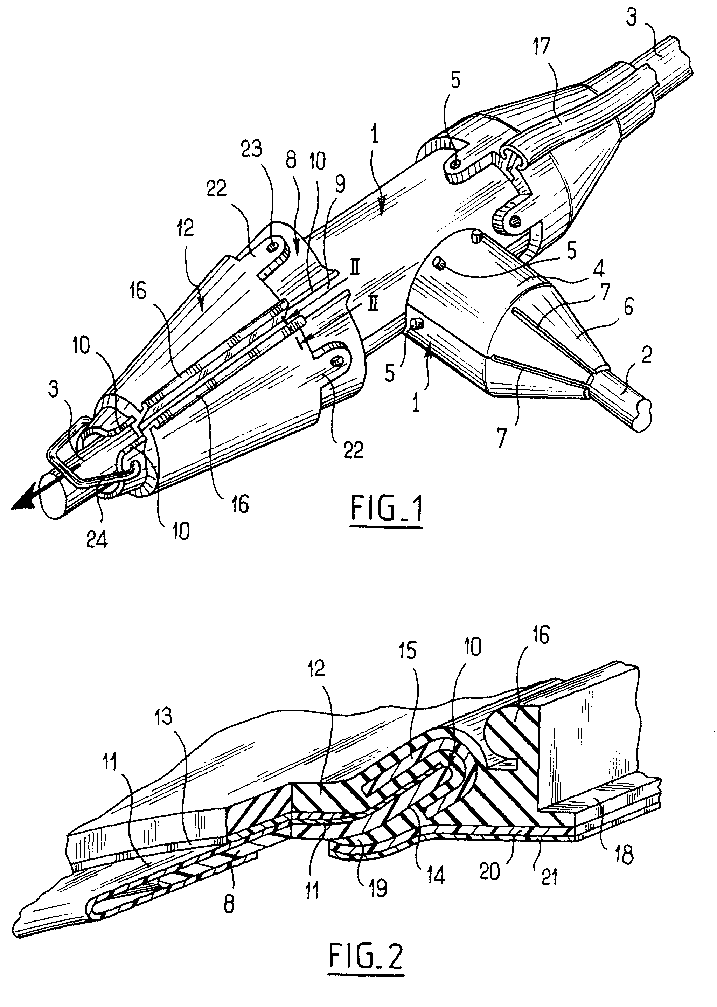

La figure 1 illustre un boîtier de dérivation formé de deux demi-coquilles 1 en forme de T disposées autour de la dérivation après avoir réalisé le branchement d'un câble de dérivation 2 sur un câble principal 3. Sur la figure la branche du boîtier de dérivation entourant le câble de dérivation 2 est représentée avant la mise en place du dispositif d'étanchéité et de protection selon l'invention, l'une des branches associées au câble principal 3 est représentée avec le dispositif d'étanchéité et de protection mis en place mais avant rétraction de la nappe élastique et la troisième branche est représentée après rétraction de la nappe élastique. Chaque branche du boîtier de dérivation comporte une partie cylindrique 4 équipée d'ergots en saillie 5, et une partie conique 6 comportant des fentes longitudinales 7 permettant une adaptation de la partie conique 6 à différents diamètres de câble tout en assurant une réduction progressive du diamètre du boîtier depuis le diamètre de la partie cylindrique 4 jusqu'au diamètre du câble.

En référence aux figures 1 et 2, le dispositif d'étanchéité et de protection selon le premier mode de réalisation de l'invention comporte un manchon support conique 8 en matière semi-rigide, par exemple en polychlorure de vinyle comportant une fente longitudinale 9 délimitée par deux bords 10 en regard. Le manchon support 8 est recouvert par un film anti-adhésif 11 qui s'étend sur la surface externe du manchon support 8 et est rabattu et fixé à l'intérieur de celui-ci, par exemple par collage.

Une nappe en matière élastique 12, par exemple une nappe en élastomère garnie intérieurement avec une matière d'étanchéité pâteuse 13 est montée dans un état de tension sur le manchon support 8 et est maintenue dans cet état par des moyens de retenue formés dans ce premier mode de réalisation par des parties en crochets 14 réalisés en une seule pièce avec la nappe en matière élastique 12, par exemple par extrusion de celle-ci. Les parties en crochet 14 sont de préférence renforcées par des profilés 15 noyés dans la matière élastique de la nappe 12. Les parties en crochets 14 sont montées à cheval sur les bords 10 du manchon support 8 et assurent le maintien de la nappe élastique 12 dans un état de tension sur le manchon support 8. Le long de deux bords en regard, la nappe élastique 12 comporte des parties d'assemblage profilées 16 auxquelles peut être associée une réglette flexible en C 17. L'un des bords de la nappe en matière élastique 12 comporte de préférence une languette 18 qui vient s'insérer sous le bord en regard de la nappe élastique 12 lors de la mise en place de la réglette flexible 17.

Chaque partie en crochet 14 se termine par une lèvre flexible 19 qui vient refermer la partie en crochet 14 lors du retrait du manchon support 8. La face interne de la nappe en matière élastique 12 comprise entre la lèvre 19 et le bord de la nappe élastique est également garnie de matière d'étanchéité 20 recouverte d'une bande de matière anti-adhésive 21.

Dans le mode de réalisation illustré, la nappe élastique 12 est en outre équipée à l'une de ses extrémités de pattes d'accrochage 22 percées de trous 23 permettant le montage des pattes d'accrochage 22 sur les ergots 5 du boîtier de dérivation. A l'extrémité opposée aux pattes d'accrochage 22, le manchon support 8 est de préférence équipé d'une poignée amovible 24.

Lors de l'utilisation les bandes de matière anti-adhésive 21 sont retirées et la fente longitudinale 9 du manchon support est ouverte en prenant appui sur les parties d'assemblage 16 afin d'engager le dispositif de protection autour de la branche souhaitée du boîtier de dérivation. Lorsque les bords du manchon support sont relâchés celui-ci se referme comme illustré sur la figure 1 et les parties d'assemblage 16 sont alors adjacentes l'une à l'autre de sorte qu'il est aisé de mettre en place la réglette flexible 17 sur les parties d'assemblage 16 pour réunir celles-ci. Tout en maintenant la nappe élastique 12 avec une main l'opérateur exerce alors une traction sur la poignée 24 comme indiqué par une flèche en trait épais sur la figure 1 jusqu'à ce que le manchon support 8 soit en retrait par rapport aux pattes 22 et permette l'accrochage de celles-ci sur les ergots 5. On remarquera que pendant le retrait du manchon support 8 le film anti-adhésif 11 est également retiré en se repliant sur lui-même comme illustré sur la partie gauche de la figure 2.

Après accrochage des pattes 22 sur les ergots 5 une traction continue est exercée sur la poignée 24 et la partie évasée du manchon support 8 est progressivement déplacée dans la nappe élastique 12 de sorte qu'elle provoque tout d'abord une expansion de celle-ci puis une rétraction sur la branche du boîtier de dérivation. On remarquera à ce propos que la forme conique du manchon support 8 permet de stocker la nappe élastique 12 dans un état proche du diamètre final après rétraction de sorte que même dans le cas d'un stockage prolongé la nappe élastique gardera toujours une élasticité suffisante pour être plaquée avec une force appropriée contre le boîtier de dérivation et contre le câble.

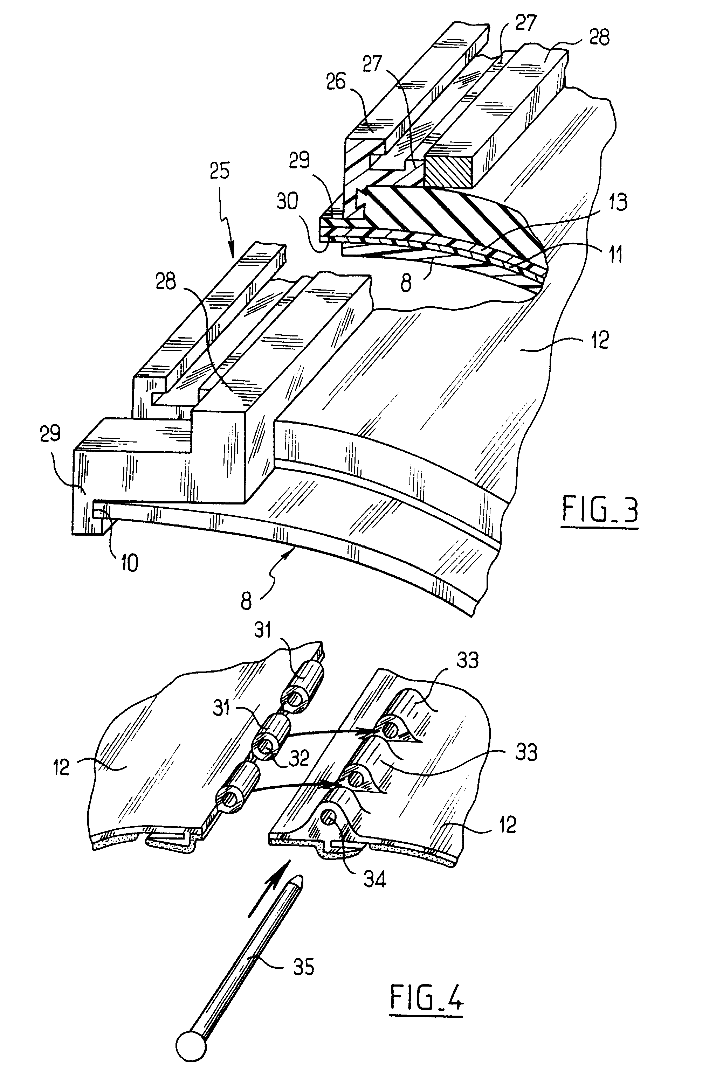

La figure 3 illustre un autre mode de réalisation de l'invention dans lequel les parties semblables aux modes de réalisation des figures 1 et 2 ont été désignés par les mêmes références numériques. Dans ce mode de réalisation le manchon support 8 est cylindrique et chaque bord de la nappe en matière élastique 12 est fixé à un profilé 25 comportant une partie d'assemblage 26 et un talon 27. La nappe élastique 12 est maintenue dans un état de tension par des moyens de retenue qui comprennent cette fois une barrette amovible 28 associée à chaque profilé d'assemblage 25 et prenant appui sur le talon 27. La barrette 28 s'étend au-delà des extrémités de la nappe en matière élastique 12 et est fixée au manchon support 8 par des crochets 29 engagés sur les bords 10 du manchon support 8. Lors de la mise en place d'une réglette flexible sur les parties d'assemblage 26 des profilés 25 pour réunir ceux-ci, une légère tension supplémentaire est appliquée à la nappe en matière élastique 12 de sorte que les talons 27 sont écartés des barrettes 28 d'une distance suffisante pour permettre un dégagement des crochets 29 et un retrait des barrettes 28.

De même que précédemment la nappe en matière élastique 12 comporte une languette 29 qui vient assurer une étanchéité entre les deux profilés d'assemblage 25 en regard. La languette 29 est garnie intérieurement de matière d'étanchéité 13 recouverte d'une bande de matière anti-adhésive 30 sur la partie de nappe élastique 12 qui n'est pas supportée par le manchon support 8.

Le mode de réalisation avec un manchon support cylindrique peut entraîner une rémanence lors de la rétraction après un temps prolongé de stockage, ce qui constitue un inconvénient de cette version, mais la fabrication et le montage de la nappe et du manchon support sous forme cylindrique sont sensiblement moins onéreux que sous la forme conique. Quel que soit le mode de réalisation de l'invention on pourra donc choisir la version cylindrique ou conique selon le but recherché (faible coût ou faible rémanence). Dans la version cylindrique on peut prévoir de laisser les pattes d'accrochage 22 dépasser en porte à faux à l'extrémité du manchon support de sorte qu'elles peuvent être directement mises en place sur les ergots 5 avant de commencer le retrait du manchon support 8.

La figure 4 illustre une variante de réalisation des moyens d'assemblage des bords d'une nappe élastique qui a par ailleurs une structure semblable à celle de la figure 2 (sans les profilés 15). Dans cette variante l'un des bords de la nappe 12 présente des segments de bourrelet cylindriques 31 percés d'un canal longitudinal 32. Légèrement en retrait par rapport à l'autre bord de la nappe 12 celle-ci comporte des bossages en saillie 33 décalés longitudinalement par rapport aux segments du bourrelet 31 et percés d'un canal longitudinal 34. Lors de la mise en place du dispositif de protection les segments de bourrelet 31 sont insérés entre les bossages 33 et un jonc cylindrique flexible 35 est introduit dans le canal formé par la mise en alignement des canaux longitudinaux 32 et 34. Le manchon support (non représenté sur cette figure) est ensuite retiré pour permettre une rétraction de la nappe élastique.

Bien entendu l'invention n'est pas limitée aux modes de réalisation décrits et on peut y apporter des variantes de réalisation sans sortir du cadre de l'invention tel que défini par les revendications.

En particulier, bien que le dispositif selon l'invention ait été illustré sous forme de tronçons de nappe élastique destinés à être montés sur les extrémités des branches d'une boîte de dérivation, on peut réaliser le dispositif d'étanchéité et de protection selon l'invention avec une nappe en matière élastique présentant une longueur suffisante pour recouvrir une jonction en une seule opération.

Bien que l'invention ait été illustrée avec des profilés d'assemblage réunis par une réglette flexible on peut prévoir des moyens d'assemblage du type fermeture à glissière ou une série de plots disposés le long des bords de la nappe élastique et associés par des boucles.

De même on peut prévoir différents modes de réalisation de l'accrochage des bords de la nappe élastique sur le manchon support 8. En particulier dans le cas illustré de profilés de renforts 15 noyés dans la matière de la nappe élastique, on peut prévoir de disposer ceux-ci de façon amovible dans la nappe élastique afin de pouvoir les retirer et assurer ainsi une plus grande souplesse de la nappe élastique 12 après son montage sur la jonction ou la dérivation.

Bien que le film anti-adhésif 11 ait été illustré sur la figure 2 selon un mode de réalisation où il est replié sur le manchon support et fixé à l'intérieur de celui-ci, on peut prévoir de replier le film anti-adhésif sur lui-même et fixer l'épaisseur repliée à l'extérieur du manchon support.

## Revendications

1. Dispositif d'étanchéité et de protection rétractable à froid comportant une nappe en matière élastique (12) ayant deux bords opposés équipés de moyens d'assemblage (16, 26), caractérisé en ce que la nappe élastique (12) est montée de façon amovible dans un état de tension sur un manchon support semi-rigide (8) comportant une fente longitudinale (9) ayant des bords (10) en regard, et en ce que le dispositif comporte des moyens de retenue (14, 28) pour associer la nappe en matière élastique (12) au manchon support (8) au voisinage des bords (10) de la fente longitudinale du manchon support (8).

2. Dispositif d'étanchéité et de protection rétractable à froid selon la revendication 1, caractérisé en ce qu'il comporte une matière d'étanchéité pâteuse (13, 20) disposée sur une face interne de la nappe élastique 12.

3. Dispositif d'étanchéité et de protection rétractable à froid selon la revendication 2, caractérisé en ce qu'il comporte un film anti-adhésif (11) disposé entre la matière d'étanchéité (13) et le manchon support (8).

4. Dispositif d'étanchéité et de protection rétractable à froid selon la revendication 3, caractérisé en ce que le film anti-adhésif (11) est replié et est fixé à une extrémité du manchon support (8).

5. Dispositif d'étanchéité et de protection rétractable à froid selon la revendication 1, caractérisé en ce que le manchon support (8) est conique.

6. Dispositif d'étanchéité et de protection rétractable à froid selon la revendication 1, caractérisé en ce qu'au voisinage d'une extrémité la nappe en matière élastique comporte des moyens d'accrochage (22) sur un boîtier.

7. Dispositif d'étanchéité et de protection rétractable à froid selon la revendication 1, caractérisé en ce que les moyens de retenue comprennent des parties en crochets (14) solidaires de la nappe en matière élastique et engagés sur les bords (10) de la fente longitudinale du manchon support (8).

8. Dispositif d'étanchéité et de protection rétractable à froid selon la revendication 7, caractérisé en ce qu'il comporte des lèvres flexibles (19) s'étendant le long des bords internes des parties en crochets (14).

9. Dispositif d'étanchéité et de protection rétractable à froid selon la revendication 7, caractérisé en ce que les parties en crochets (14) comportent des profilés de renfort (15) noyés dans la matière élastique de la nappe (12).

10. Dispositif d'étanchéité et de protection rétractable à froid selon la revendication 1, caractérisé en ce que les moyens de retenue comportent des profilés (25) solidaires de la nappe en matière élastique (12), et des barrettes amovibles (28) en appui contre les profilés (25) et fixées de façon amovible au manchon support (8).

## Patentansprüche

1. Kaltschrumpfbare Vorrichtung zum Abdichten und Schützen, umfassend eine Schicht (12) aus elastischem Material mit zwei gegenüberliegenden Rändern, die mit Montagemitteln (16, 26) ausgestattet sind, dadurch **gekennzeichnet**, daß die elastische Schicht (12) abnehmbar in einem gespannten Zustand auf einer halbstarren Trägermuffe (8) angebracht ist, die einen länglichen Schlitz (9) mit einander gegenüberliegenden Rändern (10) hat, und daß die Vorrichtung Haltemittel (14, 28) hat, um die Schicht (12) aus elastischem Material mit der Trägermuffe (8) nahe den Rändern (10) des länglichen Schlitzes der Trägermuffe (8) zu verbinden.

2. Kaltschrumpfbare Vorrichtung zum Abdichten und Schützen nach Anspruch 1, dadurch **gekennzeichnet**, daß sie ein pastenförmiges Abdichtmaterial (13, 20) umfaßt, das auf einer Innenseite der elastischen Schicht (12) aufgebracht wird.

3. Kaltschrumpfbare Vorrichtung zum Abdichten und Schützen nach Anspruch 2, dadurch **gekennzeichnet**, daß sie einen Antiklebefilm (11) umfaßt, der zwischen dem Abdichtmaterial (13) und der Trägermuffe (8) aufgebracht wird.

4. Kaltschrumpfbare Vorrichtung zum Abdichten und Schützen nach Anspruch 3, dadurch **gekennzeichnet**, daß der Antiklebefilm (11) an einem Ende der Trägermuffe (8) umgeschlagen und befestigt wird.

5. Kaltschrumpfbare Vorrichtung zum Abdichten und Schützen nach Anspruch 1, dadurch **gekennzeichnet**, daß die Trägermuffe (8) kegelförmig ist.

6. Kaltschrumpfbare Vorrichtung zum Abdichten und Schützen nach Anspruch 1, dadurch **gekennzeichnet**, daß die Schicht aus elastischem Material nahe einem Ende Mittel (22) zum Verhaken mit einem Gehäuse hat.

7. Kaltschrumpfbare Vorrichtung zum Abdichten und Schützen nach Anspruch 1, dadurch **gekennzeichnet**, daß die Haltemittel hakenförmige Abschnitte (14) umfassen, die fest mit der Schicht aus elastischem Material verbunden sind und mit den Rändern (10) des länglichen Schlitzes der Trägermuffe (8) in Eingriff stehen.

8. Kaltschrumpfbare Vorrichtung zum Abdichten und Schützen nach Anspruch 7, dadurch **gekennzeichnet**, daß sie biegsame Lippen (19) umfaßt, die sich entlang der Innenränder der hakenförmigen Abschnitte (14) erstrecken.

9. Kaltschrumpfbare Vorrichtung zum Abdichten und Schützen nach Anspruch 7, dadurch **gekennzeichnet**, daß die hakenförmigen Abschnitte (14) Versteifungsprofile (15) umfassen, die in dem elastischen Material der Schicht (12) eingebettet sind.

10. Kaltschrumpfbare Vorrichtung zum Abdichten und Schützen nach Anspruch 1, dadurch **gekennzeichnet**, daß die Haltemittel Profile (25), die fest mit der Schicht (12) aus elastischem Material verbunden sind, und abnehmbare Stege (28) umfassen, die an den Profilen (25) anliegen und abnehmbar an der Trägermuffe (8) befestigt sind.

## Claims

1. A cold-shrink sealing and protection device including a sheet of elastic material (12) having two opposite edges fitted with assembly means (16, 26), the device being characterized in that the elastic sheet (12) is removably mounted in a state of tension on a semirigid support sleeve (8) having a longitudinal slot (9) with facing edges (10), and in that the device includes retaining means (14, 28) for associating the sheet of elastic material (12) with the support sleeve (8) in the vicinity of the edges (10) of the longitudinal slot of the support sleeve (8).

2. A cold-shrink sealing and protection device according to claim 1, characterized in that it includes a semisolid sealing material (13, 20) disposed on an inside face of the elastic sheet (12).

3. A cold-shrink sealing and protection device according to claim 2, characterized in that it includes an anti-adhesive film (11) disposed between the sealing material (13) and the support sleeve (8).

4. A cold-shrink sealing and protection device according to claim 3, characterized in that the anti-adhesive film (11) is folded over and is fixed to one end of the support sleeve (8).

5. A cold-shrink sealing and protection device according to claim 1, characterized in that the support sleeve (8) is conical.

6. A cold-shrink sealing and protection device according to claim 1, characterized in that in the vicinity of one of its ends, the sheet of elastic material includes means (22) for fastening to a box.

7. A cold-shrink sealing and protection device according to claim 1, characterized in that the retaining means comprise hook portions (14) secured to the sheet of elastic material and engaged on the edges (10) of the longitudinal slot of the support sleeve (8).

8. A cold-shrink sealing and protection device according to claim 7, characterized in that it includes flexible lips (19) extending along the inside edges of the hook portions (14).

9. A cold-shrink sealing and protection device according to claim 7, characterized in that the hook portions (14) have reinforcing section members (15) embedded in the elastic material of the sheet (12).

10. A cold-shrink sealing and protection device according to claim 1, characterized in that the retaining means include section members (25) secured to the sheet of elastic material (12), and removable strips (28) bearing against the section members (35) and removably fixed to the support sleeve (8).
